(19) **Europäisches Patentamt / European Patent Office / Office européen des brevets**

(11) **EP 4 733 444 A1**

(12) # EUROPEAN PATENT APPLICATION
published in accordance with Art. 153(4) EPC

(43) Date of publication:
**29.04.2026 Bulletin 2026/18**

(21) Application number: **23941832.0**

(22) Date of filing: **23.06.2023**

(51) International Patent Classification (IPC):
**C25B 9/00** (2021.01)     **C25B 1/04** (2021.01)
**C25B 11/052** (2021.01)

(52) Cooperative Patent Classification (CPC):
**C25B 1/04; C25B 9/00; C25B 11/052**

(86) International application number:
**PCT/JP2023/023432**

(87) International publication number:
**WO 2024/262046 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Panasonic Intellectual Property Management Co., Ltd.**
**Kadoma-shi, Osaka 571-0057 (JP)**

(72) Inventors:
• **MURASE, Hideaki**
  **Kadoma-shi, Osaka 571-0057 (JP)**

• **NAKAUE, Takayuki**
  **Kadoma-shi, Osaka 571-0057 (JP)**
• **HAYASHI, Takao**
  **Kadoma-shi, Osaka 571-0057 (JP)**
• **ASAZAWA. Koichiro**
  **Kadoma-shi, Osaka 571-0057 (JP)**
• **KANI, Yukimune**
  **Kadoma-shi, Osaka 571-0057 (JP)**

(74) Representative: **Eisenführ Speiser Patentanwälte Rechtsanwälte PartGmbB**
**Gollierstraße 4**
**80339 München (DE)**

(54) **WATER ELECTROLYSIS ELECTRODE, WATER ELECTROLYSIS ANODE, WATER ELECTROLYSIS CATHODE, WATER ELECTROLYSIS CELL, WATER ELECTROLYSIS DEVICE, AND METHOD FOR PRODUCING WATER ELECTROLYSIS ELECTRODE**

(57)     A water electrolysis electrode 1 includes a conductive substrate 10 and a layered double hydroxide layer 11. The conductive substrate 10 has a surface 10a including nickel having a (111) plane orientation. The layered double hydroxide layer 11 includes a layered double hydroxide including two or more transition metals. The layered double hydroxide layer 11 is disposed on the surface 10a.

FIG.1

**Description**

TECHNICAL FIELD

The present invention relates to a water electrolysis electrode, a water electrolysis anode, a water electrolysis cathode, a water electrolysis cell, a water electrolysis device, and a method for manufacturing a water electrolysis electrode.

BACKGROUND ART

In recent years, there has been an expectation for development of electrodes to be used in water electrolysis devices.

Patent Literature 1 describes a cathode for aqueous solution electrolysis. This cathode includes a conductive substrate having a nickel surface, a mixed layer formed on the surface of the conductive substrate, and an electrode catalyst layer disposed on the mixed layer. The mixed layer includes metallic nickel, nickel oxide, and carbon atoms. The electrode catalyst layer is a layer containing a metal of a platinum group or a metal compound of a platinum group. An electrode substrate is manufactured by forming the mixed layer by applying a nickel compound such as nickel formate and nickel acetate onto a surface of the conductive substrate having a nickel surface, and by thermally decomposing the compound under specified conditions.

Patent Literature 2 describes a method for manufacturing a water electrolysis electrode, and the method including a step of immersing an electrode substrate in an organic solvent, where the electrode substrate includes a predetermined layered double hydroxide. In this manufacturing method, the electrode substrate is manufactured by performing an electrodeposition process in an aqueous solution including a compound containing a metal M1 and a compound containing a metal M2, by use of a conductive substrate as an anode. For example, a layered double hydroxide containing nickel and iron (NiFe-LDH) is formed on the surface of foamed nickel of the electrode by electrodeposition process, and the layer of NiFe-LDH is peeled off by immersing the electrode in a specific formamide solution.

In Non Patent Literature 1, activity of oxygen evolution reaction (OER) of a Ni-Fe layered double hydride (Ni-Fe LDH) electrode is examined.

In Non Patent Literature 2, it is described that the local electronic structure of Ni-Fe LDH is adjusted by an interfacial interaction between FeOOH and the Ni-Fe LDH, which enhances the OER electrode-catalytic activity. In an alkaline water electrolysis, outflow of an electrode catalyst or an electrode substrate from the electrode is an issue, where the outflow is caused by redox of the electrode substrate and the electrode due to a reverse current generated by a repeated operation-suspension cycle.

CITATION LIST

Patent Literature

Patent Literature 1: JP 2011-190534 A
Patent Literature 2: WO 2017/154134

Non Patent Literature

Non Patent Literature 1: Electrochimica Acta, (UK), 2019, Vol.315, p.94-101
Non Patent Literature 2: ACS Catalysis, (US), 2018, Vol.8, p.11342-11351

SUMMARY OF INVENTION

Technical Problem

The description in the above literatures need to be reconsidered from the viewpoint of durability of the electrodes used in the water electrolysis devices. Therefore, the present disclosure provides a novel water electrolysis electrode that is advantageous from the viewpoint of durability.

Solution to Problem

The present disclosure provides a water electrolysis electrode including:

a conductive substrate; and
a layered double hydroxide layer including two or more transition metals, wherein
the conductive substrate has a surface formed of nickel having a (111) plane orientation, and
the layered double hydroxide layer is disposed on the surface.

Advantageous Effects of Invention

According to the present disclosure, it is possible to provide a novel water electrolysis electrode that is advantageous from the viewpoint of durability.

BRIEF DESCRIPTION OF DRAWINGS

FIG. 1 is a cross-sectional view schematically showing a water electrolysis electrode according to a first embodiment.
FIG. 2 is a diagram schematically showing an example of a crystal structure of a layered double hydroxide (LDH).
FIG. 3 is a diagram schematically showing a mechanism in manufacturing the water electrolysis electrode according to the first embodiment.
FIG. 4 is a cross-sectional view schematically showing an example of a water electrolysis cell according to a second embodiment.
FIG. 5 is a cross-sectional view schematically showing an example of a water electrolysis device according to a third embodiment.
FIG. 6 is a cross-sectional view schematically showing an example of a water electrolysis cell according to a fourth embodiment.
FIG. 7 is a cross-sectional view schematically showing an example of a water electrolysis device according to a fifth embodiment.
FIG. 8 is a graph showing a relation between an OER overpotential and the number of cycles for an electrode according to Example 1 and electrodes according to Comparative Examples 2 and 3.
FIG. 9A shows a transmission electron microscope (TEM) image of the electrode according to Example 1.
FIG. 9B shows an electron diffraction image regarding the TEM image shown in FIG. 9A.
FIG. 9C shows an electron diffraction image regarding the TEM image shown in FIG. 9A.
FIG. 9D shows another TEM image regarding the electrode according to Example 1.
FIG. 10A shows a TEM image of an electrode according to Example 3.
FIG. 10B shows an electron diffraction image regarding the TEM image shown in FIG. 10A.
FIG. 10C shows an electron diffraction image regarding the TEM image shown in FIG. 10A.
FIG. 11A shows a TEM image of an electrode according to Comparative Example 3.
FIG. 11B shows an electron diffraction image regarding the TEM image shown in FIG. 11A.
FIG. 11C shows an electron diffraction image regarding the TEM image shown in FIG. 11A.
FIG. 11D shows another TEM image of the electrode according to Comparative Example 3.

DESCRIPTION OF EMBODIMENTS

(Findings on which the present disclosure is based)

Use of renewable energy sources such as solar power and wind power has been attracting attention as a measure against global warming. In the case of power generation using renewable energy sources, attention has been focused on improving the efficiency of energy utilization by use of surplus electricity. Therefore, methods of producing and storing hydrogen from surplus electricity are being considered.
Electrolysis of water is a possible method for producing hydrogen from surplus electricity. In order to produce hydrogen affordably and stably, there is a demand for development of a highly efficient, long-life water electrolysis device.
Examples of major methods for water electrolysis include alkaline water electrolysis, polymer water electrolysis, and high-temperature steam electrolysis. Among them, alkaline water electrolysis is the most commonly used currently. In water electrolysis, oxygen is generated at the anode and hydrogen is generated at the cathode. The reaction in which oxygen is generated at the anode may be called an anode reaction, and the reaction in which hydrogen is generated at the cathode may be called a cathode reaction. In order to provide a highly efficient water electrolysis device, it is desirable that the overpotential is low, especially at the anode. In addition, it is desirable that the overpotential is low at the cathode as well. Therefore, there is a demand for development of a high-performance electrode for the anode reaction or the cathode reaction of water electrolysis.

For example, an LDH is considered to be a promising material for water electrolysis electrodes from the viewpoint of its large specific surface area and various combinations of metal ions. In this case, it is thought that the LDH can be supported on a conductive substrate. As mentioned above, in Patent Literature 2, an electrode having a foamed nickel surface on which NiFe-LDH is formed by electrodeposition is immersed in a specified formamide solution, thereby peeling off the layer of the NiFe-LDH. On the other hand, in the aforementioned literatures including Patent Literature 2, the durability of electrodes for water electrolysis during a repeated operation-suspension cycle of a water electrolysis device has not been fully investigated, and thus, the techniques described in these literatures seem to need further investigation. As a result of repeated and diligent investigation, the present inventors have newly discovered that the durability of a water electrolysis electrode can be improved when nickel having a specific orientation forms a surface of a conductive substrate and when a layer including the LDH is formed on the surface. Based on this new finding, a water electrolysis electrode of the present disclosure has been completed.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the arrangement or the positions of the components, the connection forms or the like shown in the following embodiments are simply intended to demonstrate examples, but are not intended to limit the present disclosure. Among the components in the following embodiments, the components that are not described in the independent claims indicating the highest-level concept are described as optional components. Descriptions of components with the same reference numerals in the drawings may be omitted. The drawings show each component schematically to facilitate understanding, so that the shapes, the dimensional ratios and the like may not be accurately depicted. As for the manufacturing method, the order of the steps may be changed as necessary, and known steps may be added.

(First embodiment)

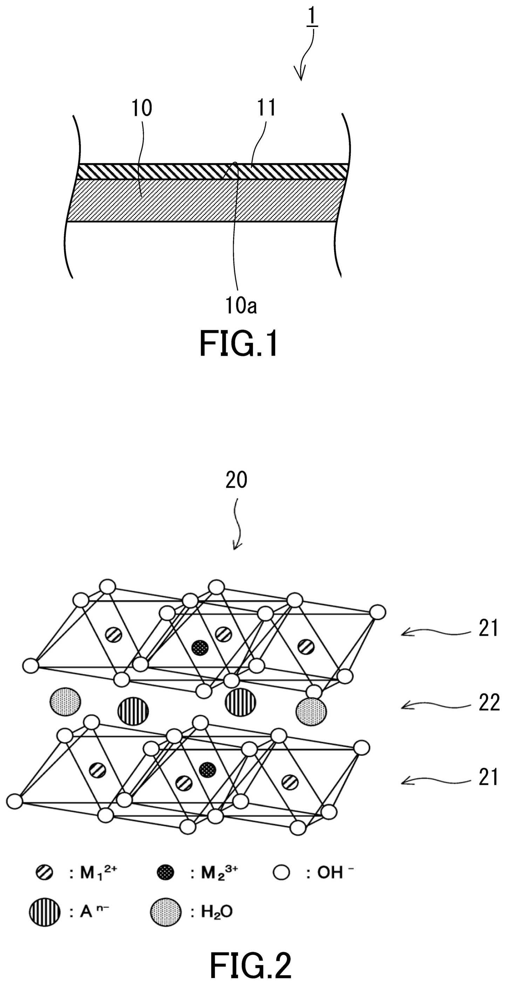

FIG. 1 is a cross-sectional view schematically showing a water electrolysis electrode according to the first embodiment. As shown in FIG. 1, the water electrolysis electrode 1 includes a conductive substrate 10 and a layered double hydroxide (LDH) layer 11. The conductive substrate 10 has a surface 10a formed of nickel having a (111) plane orientation. The LDH layer 11 includes a layered double hydroxide including two or more transition metals. The LDH layer 11 is capable of functioning as a catalyst for the anode reaction or the cathode reaction of water electrolysis. The LDH layer 11 is disposed on the surface 10a. Therefore, even if operation and suspension are repeated in the water electrolysis device including the water electrolysis electrode 1, the LDH layer 11 formed on the surface 10a of the conductive substrate 10 is hardly peeled off from the conductive substrate 10. As a result, the water electrolysis electrode 1 is likely to exhibit high durability. The LDH can be converted into a hydroxide in the process of water electrolysis.

A ratio of the area of nickel having a (111) plane orientation on the surface 10a to the area of the surface 10a is not limited to a specific value. For example, the ratio is 70% or more. This allows the water electrolysis electrode 1 to exhibit high durability. The ratio may be 80% or more, or 90% or more.

When the potential of the water electrolysis electrode 1 is changed to cause a reduction reaction of nickel, the integral value $I_{Ni}$ of the current density corresponding to this reduction reaction is not limited to a specific value. The integral value $I_{Ni}$ is, for example, greater than 200 mA/cm$^2$. This makes it easier for the water electrolysis electrode 1 to exhibit high durability. The integral value $I_{Ni}$ can be determined by referring to the method described in Examples.

In the water electrolysis electrode 1, the integral value $I_{Ni}$ may be 398 mA/cm$^2$ or more. The integral value $I_{Ni}$ may be 803 mA/cm$^2$ or more.

Purity of the nickel forming the surface 10a is not limited to a specific value. The purity is, for example, 90 mass% or more. In this case, the water electrolysis electrode 1 is more likely to exhibit high durability. In addition, the conductive substrate 10 is more likely to have high alkaline resistance. The method for determining the purity of the nickel that forms the surface 10a is not limited to a specific method. The purity of the nickel that forms the surface 10a may be determined by an elemental analysis such as X-ray fluorescence spectroscopy (XRF) and energy dispersive X-ray spectroscopy (EDX). For example, the purity of the nickel may be determined by analyzing the extract obtained by completely dissolving the conductive substrate 10 in aqua regia using a method such as inductively coupled plasma atomic emission spectrometry (ICP-AES). In the case where the purity of the nickel is high, the purity of the nickel may be determined by comparing the specific gravity of the conductive substrate 10 with the specific gravity of pure nickel.

The purity of the nickel that forms the surface 10a is preferably 95 mass% or more, more preferably 97 mass% or more, even more preferably 98 mass% or more, and in particular 99 mass% or more.

The conductive substrate 10 is not limited to a specific substrate, as long as its surface 10a is formed of nickel having a (111) plane orientation. The conductive substrate 10 may include a metal other than nickel, or it may include a resin. The entire conductive substrate 10 may be composed of nickel. The conductive substrate 10 may have a structure in which a surface layer including nickel is formed to coat the surface of a member of a resin such as polypropylene or polyethylene. In this case, the surface layer including nickel may be a plated film or a sputtered film. The metal included in the conductive substrate 10 may be a pure metal such as nickel or iron, or an alloy such as stainless steel or Inconel. Inconel is a registered trademark.

The shape of the conductive substrate 10 is not limited to a specific shape. The conductive substrate 10 may be in the form of particles. The conductive substrate 10 may be in the form of a sheet. The sheet-shaped conductive substrate 10 may have a non-porous structure, such as a plate or a foil, or it may have a porous structure, such as expanded metal, a mesh, a foamed body, or a non-woven fabric. The conductive substrate 10 preferably has a porous structure. In this case, the surface area of the conductive part of the conductive substrate 10 is likely to be large, and the water electrolysis electrode 1 is likely to have high electrode activity. In addition, it is likely to prevent the escape of gas generated during the water electrolysis reaction.

The thickness of the conductive substrate 10 is not limited to a specific value. The conductive substrate 10 is, for example, 0.02 mm or more in thickness. In this case, the conductive substrate 10 can be handled easily. The thickness of the conductive substrate 10 is, for example, 10 mm or less, and preferably 1 mm or less.

As described above, the LDH layer 11 includes the LDH. FIG. 2 is a diagram schematically showing an example of the crystal structure of the LDH. An LDH 20 has activity for the generation of gases such as hydrogen and oxygen at the anode or the cathode of a water electrolysis cell. For example, in an alkaline water electrolysis, the LDH 20 can be converted into hydroxide through a water electrolysis reaction.

The LDH 20 has a composition represented by the following Formula (1), for example. In Formula (1), $M1^{2+}$ is a divalent transition metal ion. $M2^{3+}$ is a trivalent transition metal ion. $A^{n-}$ is an interlayer anion. $x$ is a rational number that satisfies a requirement $0 < x < 1$. $y$ is a number that corresponds to the required amount of charge balance. $n$ is an integer. And $m$ is a suitable rational number.

$$[M1^{2+}_{1-x}M2^{3+}_x(OH)_2][yA^{n-}\cdot mH_2O] \qquad \text{Formula (1)}$$

The two or more transition metals in the LDH 20 are not limited to specific transition metals. In other words, M1 and M2 in the composition shown in Formula (1) are not limited to specific transition metals. The two or more transition metals include at least two selected from the group consisting of V, Cr, Mn, Fe, Co, Ni, Cu, W, and Ru. In this case, the water electrolysis electrode 1 is likely to have high electrode activity.

The two or more transition metals in the LDH 20 include at least one selected from the group consisting of Ni and Fe. In this case, the water electrolysis electrode 1 is more likely to have high electrode activity. For example, in the composition shown in Formula (1), M1 may be Ni and M2 may be Fe.

$A^{n-}$ as an interlayer anion may be an inorganic ion or an organic ion. Examples of the inorganic ion include $CO_3^{2-}$, $NO_3^-$, $Cl^-$, $SO_a^{2-}$, $Br^-$, $OH^-$, $F^-$, $I^-$, $Si_2O_5^{2-}$, $B_4O_5(OH)_4^{2-}$, and $PO_4^{3-}$. Examples of the organic ion include $CH_3(CH_2)_nSO^{4-}$, $CH_3(CH_2)_nCOO^-$, $CH_3(CH_2)_nPO^{4-}$, and $CH_3(CH_2)_nNO^{3-}$. $A^{n-}$ can be inserted between layers of metal hydroxide together with water molecules. The charge and ion size of $A^{n-}$ are not limited to specific values. The LDH 20 may contain one kind of $A^{n-}$ or multiple kinds of $A^{n-}$.

As shown in FIG. 2, the LDH 20 has an $OH^-$ ion at each vertex of each octahedron centered on $M1^{2+}$ or $M2^{3+}$. The LDH 20 includes a metal hydroxide represented by $[M1^{2+}_{1-x}M2^{3+}_x(OH)_2]^{x+}$. The metal hydroxide has a layered structure in which the octahedra of the hydroxide share edges and are linked in two dimensions. Between the layers of the metal hydroxide, the anion $A^{n-}$ and water molecules are present. The layers of the metal hydroxide function as host layers 21, while a guest layer 22 containing an anion $A^{n-}$ and water molecules is arranged between the host layers 21. In other words, the LDH 20 as a whole has a sheet-like structure in which the host layers 21 of the metal hydroxide and the guest layer 22 with anion $A^{n-}$ and water molecules are laminated alternately. The LDH 20 has a structure in which some of $M1^{2+}$ contained in the metal hydroxide layer is replaced by $M2^{3+}$.

The LDH layer 11 may include a chelating agent. The chelating agent may coordinate with the transition metal ions contained in the LDH 20. This allows the LDH 20 to be stably present in the LDH layer 11. Furthermore, this allows the LDH 20 to be synthesized to have a small particle diameter. In addition, since the LDH 20 nucleated on the conductive substrate 10 tends to grow slowly as crystals, the LDH layer 11 including the LDH 20 and being dense with few voids is likely to have the desired thickness relative to the conductive substrate 10. This makes it easier for the LDH layer 11 to effectively contribute to the anode reaction or the cathode reaction, and makes it easier for the water electrolysis electrode 1 to have high electrode activity. The LDH layer 11 may be free of a chelating agent.

The chelating agent is not limited to a specific chelating agent. The chelating agent is, for example, an organic compound capable of coordinating with a transition metal ion in the LDH 20. The chelating agent may be at least one selected from the group consisting of a bidentate organic ligand and a tridentate organic ligand. Examples of the chelating agents include β-diketone, β-ketoester, hydroxycarboxylic acid, and hydroxycarboxylate. Examples of the β-diketones include acetylacetone (ACAC), trifluoroacetylacetone, hexafluoroacetylacetone, benzoylacetone, tenoyl trifluoroacetone, dipyrrovalyl methane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent preferably includes at least one selected from the group consisting of acetylacetone and a citrate. In this case, the water electrolysis electrode 1 is more likely to have high electrode activity. An example of the citrate is trisodium citrate.

The thickness of the LDH layer 11 is not limited to a specific value. The LDH layer 11 has a thickness of 35 nm or more, for example. With this configuration, the water electrolysis electrode 1 is more likely to have high electrode activity. The LDH layer 11 includes a portion having a thickness of 35 nm or more, for example. The thickness of the LDH layer 11 can be determined by, for example, a TEM observation of a cross-section of the water electrolysis electrode 1. The thickness of the LDH layer 11 is, for example, 213 nm or less.

A coverage of the LDH layer 11 on the surface of the conductive substrate 10 is not limited to a specific value. The coverage is preferably 99% or more. In this case, the water electrolysis electrode 1 is likely to have high electrode activity. In addition, the water electrolysis electrode 1 is likely to have high durability. The coverage can be determined, for example, in accordance with the method described in the Examples.

The LDH layer 11 is bonded to the conductive substrate 10, for example. For example, there is no adhesive layer including organic materials such as polymers between the LDH layer 11 and the conductive substrate 10, and the LDH layer 11 is bonded directly to the surface of the conductive substrate 10. Here, 'the LDH layer 11 is bonded to the conductive substrate 10' means that the LDH layer 11 is bonded to a large part of the surface of the conductive substrate 10. For example, the LDH layer 11 may be bonded to 90% or more of the surface of the conductive substrate 10.

The method for manufacturing the water electrolysis electrode 1 is not limited to a specific method. The water electrolysis electrode 1 can be manufactured in accordance with a method including the following (I) and (II), for example.

   (I) Mixing of a solution S containing a transition metal ion and a chloride ion is promoted in a state where a conductive substrate 10 having a surface 10a formed of nickel is immersed in the solution S.
   (II) An LDH layer 11 including an LDH having two or more transition metals is formed on the surface 10a of the conductive substrate 10.

As a result of the aforementioned step (I), a reaction between the nickel on the surface 10a of the conductive substrate 10 and the ions contained in the solution S, i.e., the transition metal ion and the chloride ion, is likely to occur, and some of the nickel on the surface 10a may dissolve into the solution S by etching. Therefore, the step (I) makes it easy to obtain the surface 10a formed of nickel having a (111) plane orientation. This allows the LDH layer 11 including the LDH formed in the step (II) to be disposed on the surface 10a in a desired state, whereby the water electrolysis electrode 1 is likely to exhibit high durability.

The promotion of mixing of the solution S in the step (I) can be achieved, for example, by vibrating the conductive substrate 10, shaking the container in which the solution S and the conductive substrate 10 are enclosed, or stirring the solution S using a stirrer piece and a stirrer. With this method, a forced convection of the solution S occurs, and mixing of the solution S can be promoted. As a result, the transition metal ions and the chloride ions contained in the solution S move towards the surface 10a of the conductive substrate 10, and a reaction between the nickel on the surface 10a and the ions contained in the solution S, i.e., the transition metal ion and chloride ion, can occur. The mixing of the solution may be promoted while the container containing the solution and the conductive substrate 11 is sealed, or the mixing may be promoted in an inert gas atmosphere.

The temperature of the solution S in the step (I) is not limited to a specific temperature. For example, the temperature of the solution S in the step (I) is 20°C ± 15°C. In this case, a water electrolysis electrode 1 having high electrode activity can be obtained easily.

The solvent of the solution S may be water, an organic solvent, or a mixture of water and an organic solvent.

The solution S may further include a chelating agent. This allows the LDH 20 to be stably present in the LDH layer 11. This further facilitates synthesis of the LDH 20 having a small particle size. Furthermore, since the LDH 20 nucleated on the conductive substrate 10 is likely to slowly grow, the LDH layer 11 being dense and containing few voids is likely to have the desired thickness relative to the conductive substrate 10. This makes it easier for the LDH layer 11 to effectively contribute to the anode reaction or the cathode reaction, and makes it easier for the water electrolysis electrode 1 to have high electrode activity. The solution S may be free of a chelating agent.

The chelating agent included in the solution S may be selected with reference to the above examples of the chelating agents to be included in the LDH layer 11. The chelating agent included in the solution S preferably includes at least one selected from the group consisting of acetylacetone and a citrate. This improves the dispersion stability of the complex in the solution S and facilitates formation of the LDH layer 11 in the water electrolysis electrode 1 in the desired state. As a result, the water electrolysis electrode 1 is more likely to have high electrode activity.

In the step of (II), the method of forming the LDH layer 11 including the LDH is not limited to a specific method. The LDH layer 11 including LDH can be formed, for example, by adjusting the solution S to be alkaline. This makes it easier for the water electrolysis electrode 1 to exhibit high durability.

The method of adjusting the solution S to be alkaline is not limited to a specific method. For example, the solution may be adjusted to be alkaline by mixing the above solution S with an alkaline solution. Alternatively, the solution may be adjusted to be alkaline by adding a pH booster to the solution. In this case, the pH booster is not limited to a specific compound. The pH booster is, for example, a compound having an epoxy group. Examples of the pH booster include propylene oxide, ethylene oxide, and butylene oxide.

When a pH booster having an epoxy group such as propylene oxide is added to the solution S, in the presence of a nucleophile such as a chloride ion, the pH booster can capture hydrogen ions present in the solution S, following the ring-opening reaction of the epoxy group. As a result, the pH of the solution S rises, and the solution S can be alkaline. The pH of the solution S is acidic, for example. When the pH booster is added to the solution S, the pH of the solution S rises gradually, for example, and eventually the solution S can be alkaline. Addition of the pH booster to the solution promotes a reaction in which the hydrogen ions in the solution S are captured. This causes the pH of the solution S to gradually rise. The time period from the addition of the pH booster to the solution S until the pH of the solution S reaches a steady state is not limited to a specific time period. That time period can be, for example, more than 24 hours, or several days.

The temperature of the solution S when adjusting the solution S to be alkaline is not limited to a specific temperature. The temperature of the solution S is, for example, room temperature 20°C ± 15°C. In this case, a water electrolysis electrode 1 with high electrode activity can be obtained easily.

In the above manufacturing method, the two or more transition metals in the LDH are not limited to specific transition metals. One of the two or more transition metals in the LDH is the same metal species as the transition metal of the ion contained in the solution S. In this case, the transition metal ions contained in the solution S can be a source of the transition metals to be supplied for synthesizing the LDH. This may facilitate the process for manufacturing the water electrolysis electrode 1.

The two or more transition metals in the LDH include at least two selected from the group consisting of V, Cr, Mn, Fe, Co, Ni, Cu, W, and Ru, for example. Thereby, a water electrolysis electrode 1 that is more likely to exhibit high durability while having high electrode activity can be manufactured easily.

The transition metal ion contained in the solution S is not limited to a specific ion. The ion is preferably an Fe ion. In this case, a surface 10a formed of nickel having a (111) plane orientation can be obtained further easily by the step (I). Thereby, a water electrolysis electrode 1 that is more likely to exhibit high durability is manufactured easily.

In the case where the transition metal ion contained in the solution S is an Fe ion, for example, the reaction expressed by the following Formula (2) can occur. This allows the surface 10a of the conductive substrate 10 to be etched to a desired state.

$$4Ni^{2+}Cl^{-}_{2} + 2Fe^{3+}Cl^{-}_{3} + 2Ni \rightarrow 5Ni^{2+}Cl^{-}_{2} + 2Fe^{2+}Cl^{-}_{2} + 1Ni \qquad \text{Formula (2)}$$

In the case where the transition metal ion contained in the solution S is an Fe ion, the molar ratio of the content of Fe ion to the content of nickel contained in the conductive substrate 10 is not limited to a specific value. For example, the molar ratio is 0.75 or less. In this case, it is possible to prevent the nickel contained in the conductive substrate 10 from dissolving to make it difficult to manufacture the water electrolysis electrode 1, where the dissolution may be caused by the reaction shown by Formula (2).

The molar ratio is preferably in a range of 0.05 to 0.25. In this case, the LDH layer 11 can be formed easily on the surface 10a of the conductive substrate 10 in the desired state, and a water electrolysis electrode 1 with high durability can be obtained easily. In addition, the LDH layer 11 can be easily formed uniformly on the conductive substrate 10, and a water electrolysis electrode 1 with high electrode activity can be obtained easily.

In the case where the ion of the transition metal included in the solution S is an Fe ion, a value obtained by dividing the content of the Fe ion on a molar basis by the surface area of the conductive substrate 10 is not limited to a specific value. For example, this value is 0.29 mmol/cm$^2$ or less. In this case, it is possible to prevent the nickel contained in the conductive substrate 10 from dissolving to make it difficult to manufacture the water electrolysis electrode 1, where the dissolution may be caused by the reaction shown by Formula (2).

The above-described value, which is obtainable by dividing the content of Fe ions on a molar basis by the surface area of the conductive substrate 10, is preferably in a range of 0.01 mmol/cm$^2$ to 0.1 mmol/cm$^2$. In this case, the LDH layer 11 is easily formed on the surface 10a of the conductive substrate 10 in the desired state, and a water electrolysis electrode 1 having high durability is easily obtained. In addition, the LDH layer 11 can be easily formed on the conductive substrate 10 uniformly, and a water electrolysis electrode 1 having high electrode activity can be manufactured easily.

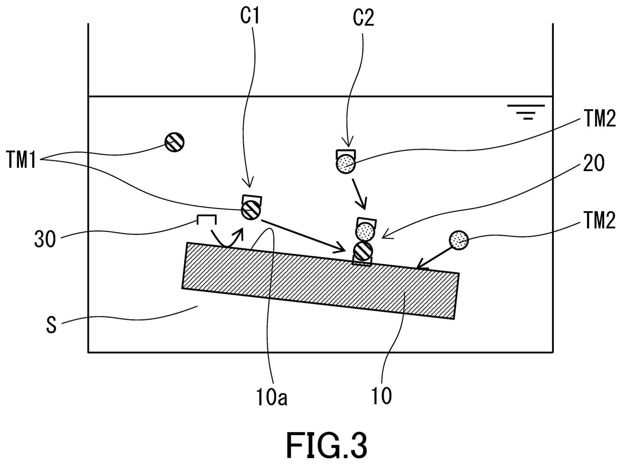

FIG. 3 is a diagram schematically showing an example of a mechanism in manufacturing a water electrolysis electrode according to the first embodiment. As shown in FIG. 3, a conductive substrate 10 is immersed in a solution S that contains an ion TM1 of a first transition metal, an ion TM2 of a second transition metal, a chloride ion (not shown), and a chelating agent 30. For example, the ion TM1 is $Ni^{2+}$ and the ion TM2 is $Fe^{3+}$. The surface 10a of the conductive substrate 10 is formed of nickel. In the step (I), the ion TM1, the ion TM2, and the chloride ion contained in the solution S diffuse near the surface 10a of the conductive substrate 10, and the conductive substrate 10 is etched as a result of the reaction shown in Formula (2), whereby some of the nickel forming the surface 10a dissolves into the solution S. When the solution S is adjusted to be alkaline, some of the chelating agent 30 reacts with the nickel that has eluted from the conductive substrate 10, and a complex C1 is formed from the nickel ion TM1 derived from the conductive substrate 10 and the chelating agent 30. In addition, a complex C1 of the ion TM1 derived from the solution S and the chelating agent 30 is formed, and a complex C2 of the ion TM2 and the chelating agent 30 is formed. Next, the complex C1 reacts with the complex C2 on the surface 10a of the conductive substrate 10, and the LDH 20 is synthesized to coat the surface 10a of the conductive substrate 10. Since the complex C1 and the complex C2 include the chelating agent 30, the crystal growth of the LDH 20 is inhibited. As a result, an LDH layer 11 including the LDH 20 is formed on the conductive substrate 10, whereby a water electrolysis electrode 1 is obtained.

The water electrolysis electrode 1 according to the present embodiment can be used to provide a water electrolysis anode including this electrode or a water electrolysis cathode including this electrode. The water electrolysis electrode 1 can be used, for example, as an electrode for a water electrolysis cell of an alkaline water electrolysis device or an anion-exchange membrane type water electrolysis device. The water electrolysis electrode 1 is used in at least one selected from the group consisting of the anode and the cathode in the water electrolysis device. This makes it easier to increase the activity of the anode reaction or the cathode reaction in a water electrolysis. In addition, it makes it easier to improve the durability of the anode or the cathode of the water electrolysis device.

(Second embodiment)

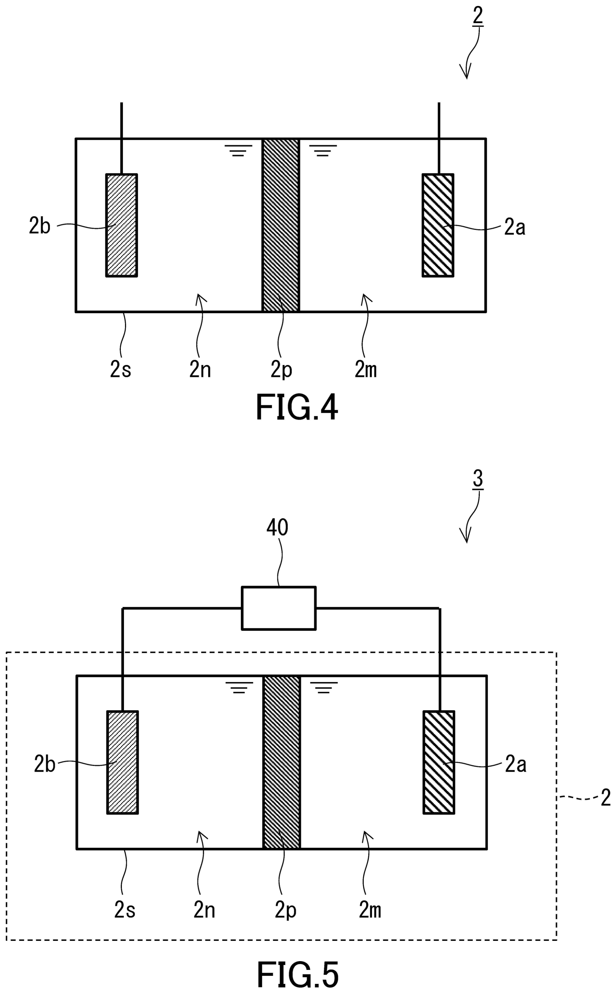

FIG. 4 is a cross-sectional view schematically showing an example of a water electrolysis cell according to a second embodiment. As shown in FIG. 4, a water electrolysis cell 2 includes an anode 2a, a cathode 2b, and a separator 2p. At least one selected from the group consisting of the anode 2a and the cathode 2b includes, for example, the water electrolysis electrode 1 according to the first embodiment. In this case, the activity of the anode reaction or the cathode reaction in the water electrolysis cell 2 is likely to increase, and the anode 2a or the cathode 2b is likely to exhibit high durability.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include a potassium hydroxide aqueous solution and a sodium hydroxide aqueous solution.

As shown in FIG. 4, the water electrolysis cell 2, for example, includes an electrolytic cell 2s, a first chamber 2m, and a second chamber 2n. The separator 2p is disposed inside the electrolytic cell 2s and separates the interior of the electrolytic cell 2s into the first chamber 2m and the second chamber 2n. The anode 2a is disposed in the first chamber 2m, and the cathode 2b is disposed in the second chamber 2n.

The separator 2p is, for example, a separator for alkaline water electrolysis. The separator 2p is, for example, a sheet-shaped porous membrane. The separator 2p has a thickness, for example, in a range of 100 μm to 500 μm and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by AGFA.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution containing a hydroxide of an alkali metal or alkaline earth metal is supplied to the first chamber 2m. In addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

In the case where the anode 2a includes the water electrolysis electrode 1, the cathode 2b may include, for example, an electrode material known as a cathode for an alkaline water electrolysis cell.

In the water electrolysis cell 2, in the case where the cathode 2b includes the water electrolysis electrode 1, the anode 2a may include the electrode material known as the anode for the alkaline water electrolysis cell. In the water electrolysis cell 2, both the anode 2a and the cathode 2b may include the water electrolysis electrode 1.

With the above configuration, at least one selected from the group consisting of the anode 2a and the cathode 2b includes the water electrolysis electrode 1, and thus, the water electrolysis cell 2 can exhibit high durability.

(Third embodiment)

FIG. 5 is a cross-sectional view schematically showing an example of a water electrolysis device according to a third embodiment. As shown in FIG. 5, a water electrolysis device 3 includes the water electrolysis cell 2 according to the second embodiment and a voltage applicator 40. The voltage applicator 40 applies a voltage between the cathode 2b and the anode 2a. The water electrolysis device 3 is an alkaline water electrolysis device in which an alkaline aqueous solution is used.

The voltage applicator 40 is electrically connected to the anode 2a and the cathode 2b. The voltage applicator 40 causes the potential of the anode 2a to become higher than the potential of the cathode 2b. The voltage applicator 40 is not limited to a specific type of voltage applicator as long as the voltage applicator 40 is capable of applying a voltage between the anode 2a and the cathode 2b. The voltage applicator 40 may be a device to adjust the voltage applied between the anode 2a and the cathode 2b. In the case where the voltage applicator 40 is connected to a direct current power source such as a battery, a solar cell and a fuel cell, the voltage applicator 40 includes a DC/DC converter, for example. In the case where the voltage applicator 40 is connected to an alternating current power source such as a commercial power source, the voltage applicator 40 is equipped with an AC/DC converter, for example. The voltage applicator 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit high durability.

(Fourth embodiment)

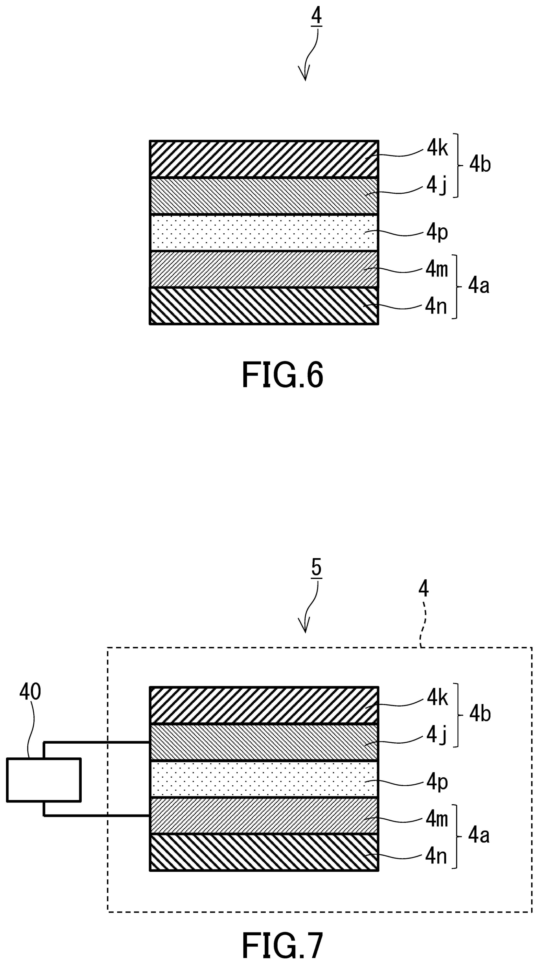

FIG. 6 is a cross-sectional view schematically showing an example of a water electrolysis cell according to a fourth embodiment. As shown in FIG. 6, a water electrolysis cell 4 includes an anode 4a, a cathode 4b, and an anion-exchange membrane 4p. In the water electrolysis cell 4, at least one selected from the group consisting of the anode 4a and the cathode 4b includes, for example, the water electrolysis electrode 1 according to the first embodiment. In this case, the activity of the anode reaction or the activity of the cathode reaction in the water electrolysis cell 4 is likely to increase, and the anode 4a or the cathode 4b is likely to exhibit high durability.

The water electrolysis cell is, for example, an anion-exchange membrane (AEM) type water electrolysis cell. As shown in FIG. 6, the anode 4a includes, for example, a catalyst layer 4m and a gas diffusion layer 4n. The cathode 4b includes, for example, a catalyst layer 4j and a gas diffusion layer 4k. The catalyst layer 4m of the anode 4a is in contact with one of the main surfaces of the anion-exchange membrane 4p, and the catalyst layer 4j of the cathode 4b is in contact with the other main surface of the anion-exchange membrane 4p.

The anion-exchange membrane 4p is not limited to a specific type of anion-exchange membrane. The anion-exchange membrane 4p has conductivity for anions such as hydroxide ions. The anion-exchange membrane 4p is capable of preventing mixing of the oxygen gas generated at the anode 4a with the hydrogen gas generated at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the water electrolysis electrode 1, the cathode 4b may be a known cathode in an AEM-type water electrolysis cell. The LDH layer 11 of the water electrolysis electrode 1 may function as the catalyst layer 4m, and the conductive substrate 10 of the water electrolysis electrode 1 may function as the gas diffusion layer 4n.

In the water electrolysis cell 4, in the case where the cathode 4b includes the water electrolysis electrode 1, the anode 4a may be the known anode of the AEM-type water electrolysis cell. The LDH layer 11 of the water electrolysis electrode 1 may function as the catalyst layer 4j, and the conductive substrate 10 of the water electrolysis electrode 1 can function as the gas diffusion layer 4k. In the water electrolysis cell 4, both the anode 4a and the cathode 4b may include the water electrolysis electrode 1.

With the above configuration, at least one selected from the group consisting of the anode 4a and the cathode 4b includes the water electrolysis electrode 1, whereby the water electrolysis cell 4 can exhibit high durability.

(Fifth embodiment)

FIG. 7 is a cross-sectional view schematically showing an example of a water electrolysis device according to a fifth embodiment. As shown in FIG. 7, a water electrolysis device 5 includes a water electrolysis cell 4 and a voltage applicator 40. The voltage applicator 40 applies a voltage between a cathode 4b and an anode 4a. The water electrolysis device 5 is, for example, an AEM-type water electrolysis device.

The voltage applicator 40 is electrically connected to the anode 4a and to the cathode 4b. Due to the voltage applicator 40, the potential of the anode 4a becomes higher than the potential of the cathode 4b. The voltage applicator 40 is not limited to a specific type of voltage applicator as long as the voltage applicator 40 is capable of applying a voltage between the anode 4a and the cathode 4b. The voltage applicator 40 may be a device to adjust the voltage applied between the anode 4a and the cathode 4b. In the case where the voltage applicator 40 is connected to a direct current power source such as a battery, solar cell, or fuel cell, the voltage applicator 40 includes a DC/DC converter, for example. In the case where the voltage applicator 40 is connected to an alternating current power source such as a commercial power source, the voltage applicator 40 includes an AC/DC converter, for example. The voltage applicator 40 may be an electric power type power source, for example. In the electric power type power source, the voltage applied between the anode 4a and the cathode 4b and the current flowing between the anode 4a and the cathode 4b are adjusted such that the power supplied to the water electrolysis device 5 becomes a predetermined set value.

With the above configuration, the water electrolysis device 5 can exhibit high durability.

(Appendix)

The following techniques are disclosed based on the above description.

(Technique 1)

A water electrolysis electrode including:

a conductive substrate; and
a layered double hydroxide layer including two or more transition metals, wherein
the conductive substrate has a surface formed of nickel having a (111) plane orientation, and
the layered double hydroxide layer is disposed on the surface.

Here, the expression that the layered double hydroxide layer is disposed on the surface means that the layered double hydroxide layer is disposed on a large part of the surface. For example, the layered double hydroxide layer may be disposed on 90% or more of the surface of the conductive substrate.

(Technique 2)

The water electrolysis electrode according to Technique 1, wherein
when a potential of the water electrolysis electrode is changed to cause a reduction reaction of the nickel, an integral value of a current density corresponding to the reduction reaction is greater than 200 mA/cm$^2$.

(Technique 3)

The water electrolysis electrode according to Technique 1 or 2, wherein
the nickel forming the surface has a purity of 90 mass% or more.

(Technique 4)

The water electrolysis electrode according to any one of Techniques 1 to 3, wherein
the layered double hydroxide layer includes a chelating agent.

(Technique 5)

The water electrolysis electrode according to Technique 4, wherein
the chelating agent includes at least one selected from the group consisting of acetylacetone and a citrate.

(Technique 6)

The water electrolysis electrode according to any one of Techniques 1 to 5, wherein
the layered double hydroxide layer has a thickness of 35 nm or more.

(Technique 7)

The water electrolysis electrode according to any one of Techniques 1 to 6, wherein
the two or more transition metals include at least two selected from the group consisting of V, Cr, Mn, Fe, Co, Ni, Cu, W, and Ru.

(Technique 8)

The water electrolysis electrode according to Technique 7, wherein
the two or more transition metals include at least one selected from the group consisting of Ni and Fe.

(Technique 9)

A water electrolysis anode including the water electrolysis electrode according to any one of Techniques 1 to 8.

(Technique 10)

A water electrolysis cathode including the water electrolysis electrode according to any one of Techniques 1 to 8.

(Technique 11)

A water electrolysis cell including:

an anode;
a cathode; and
a separator, wherein
at least one requirement selected from the following group is satisfied:

the anode being the water electrolysis anode according to Technique 9; and
the cathode being the water electrolysis cathode according to Technique 10.

(Technique 12)

A water electrolysis cell including:

an anode;
a cathode; and
an anion-exchange membrane, wherein
at least one requirement selected from the following group is satisfied:

the anode being the water electrolysis anode according to Technique 9; and
the cathode being the water electrolysis cathode according to Technique 10.

(Technique 13)

A water electrolysis device including:

the water electrolysis cell according to Technique 11 or 12; and
a voltage applicator configured to apply a voltage between the cathode and the anode.

(Technique 14)

A method for manufacturing a water electrolysis electrode, including:

promoting mixing of a solution containing an ion of a transition metal and a chloride ion while a conductive substrate having a surface formed of nickel is immersed in the solution; and
forming a layered double hydroxide layer including two or more transition metals on the surface of the conductive substrate.

(Technique 15)

The method according to Technique 14, wherein
one of the two or more transition metals in the layered double hydroxide layer is the same metal species as the transition metal of the ion included in the solution.

(Technique 16)

The method according to Technique 14 or 15, wherein
the layered double hydroxide layer is formed by adjusting the solution to be alkaline.

(Technique 17)

The method according to any one of Techniques 14 to 16, wherein
the two or more transition metals include at least two selected from the group consisting of V, Cr, Mn, Fe, Co, Ni, Cu, W, and Ru.

(Technique 18)

The method according to any one of Techniques 14 to 17, wherein
the ion of the transition metal contained in the solution is an Fe ion.

(Technique 19)

The method according to Technique 18, wherein
a molar ratio of a content of the Fe ion to a content of the nickel in the conductive substrate is 0.75 or less.

(Technique 20)

The method according to Technique 19, wherein
the molar ratio is in a range of 0.05 to 0.25.

(Technique 21)

The method according to Technique 18, wherein
a value obtained by dividing a content of the Fe ion on a molar basis by a surface area of the conductive substrate is 0.29 $mmol/cm^2$ or less.

(Technique 22)

The method according to Technique 21, wherein
the value is in a range of 0.01 $mmol/cm^2$ to 0.1 $mmol/cm^2$.

(Technique 23)

The method according to any one of Techniques 14 to 22, wherein
the solution further includes a chelating agent.

(Technique 24)

The method according to Technique 23, wherein
the chelating agent includes at least one selected from the group consisting of acetylacetone and a citrate.

EXAMPLES

The present disclosure is further explained in detail by referring to Examples. The following Examples demonstrate a part of the present disclosure, and the present disclosure is not limited to the Examples.

(Example 1)

A mixed solvent was prepared by mixing 6.688 milliliters (mL) of water and 10.032 mL of ethanol. The ethanol was a product purchased from FUJIFILM Wako Pure Chemical Corporation. In the mixed solvent, a volume ratio of the water to the ethanol was 2:3. In this mixed solvent, 0.5685 g of nickel chloride hexahydrate and 0.3233 g of iron chloride hexahydrate were dissolved to prepare a solution. The nickel chloride hexahydrate and the iron chloride hexahydrate were products purchased from FUJIFILM Wako Pure Chemical Corporation. To this solution, 0.113 mL of acetylacetone (ACAC) as a chelating agent was added to obtain a chelating agent solution. The ACAC was a product purchased from Sigma-Aldrich Corporation. An amount of substance of the ACAC in the chelating agent solution was 1/3.25 of a total amount of substance of Ni ions and Fe ions. The chelating agent solution was acidic.

Five Ni meshes manufactured by Nilaco Corporation were washed with acetone for 10 minutes and then washed with a 1M HCl aqueous solution for 10 minutes for degreasing the Ni meshes and removing impurities. The Ni meshes each had a wire diameter of 0.1 mm, the number of meshes of a Ni mesh was 60, and each Ni mesh was shaped circular with a diameter of 15 mm in a plan view. The total weight of the five Ni meshes was 0.281 g. Next, the Ni meshes were washed with water and dried to complete the washing treatment of the Ni mesh. The purity of the Ni mesh was 99 mass%.

After completion of the washing process, the Ni meshes were then immersed in the chelating agent solution described above. In this state, the chelating agent solution including the Ni meshes was shaken and stirred at 25°C for 24 hours. At this time, the outermost surface of the Ni mesh was etched in accordance with the reaction in the above Formula (2). In this case, a molar ratio of the Fe ion content to the Ni content in the Ni mesh was 0.25. In addition, a value obtained by dividing the content of the Fe ions on a molar basis by the surface area of the Ni mesh was 0.0942 millimoles (mmol)/cm$^2$. The surface area of the Ni mesh was determined by taking into account the geometric shape of the Ni mesh based on the wire diameter, the mesh count and the diameter.

Next, 1.216 mL of propylene oxide (POX) as a pH booster was added to the chelating agent solution. The amount of POX added was adjusted such that a ratio of an amount of substance of the POX to an amount of substance of the chloride ions in the mixed solution was 2. The resulting mixed solution was shaken and stirred at 25°C for 72 hours. It is understood that during the shaking and stirring of the mixed solution, the POX gradually captured the hydrogen ions in the mixed solution, and that the pH of the mixed solution gradually increased and became alkaline. After 72 hours of shaking and stirring, the Ni meshes were collected, and the Ni meshes was washed with water and dried. In this way, the electrode according to Example 1 was obtained.

(Example 2)

An electrode according to Example 2 was produced in the same way as in Example 1, except for the following points. In preparing a mixed solvent, 0.535 mL of water and 0.803 mL of ethanol were mixed. In the mixed solvent, a volume ratio of the water to the ethanol was 2:3. The amount of nickel chloride hexahydrate dissolved in the mixed solvent was 0.0455 g, and the amount of iron chloride hexahydrate dissolved in the mixed solvent was 0.0259 g. The amount of the ACAC added in the preparation of the chelating agent solution was 0.009 mL, and the amount of substance of the ACAC in the chelating agent solution was 1/3.25 of a total amount of substance of Ni ions and Fe ions. Two Ni meshes were used, and the total mass of the two Ni meshes was 0.112 g. The molar ratio of the content of Fe ions to the content of Ni in the Ni meshes during the shaking and stirring of the chelating agent solution including the Ni meshes was 0.05. In addition, a value obtained by dividing the content of Fe ions on a molar basis by the surface area of the Ni meshes was 0.0188 mmol/cm$^2$.

(Example 3)

An electrode according to Example 3 was prepared in the same way as Example 1, except for the following points. In preparing a mixed solvent, 6.900 mL of water and 10.351 mL of ethanol were mixed. In the mixed solvent, a volume ratio of the water to the ethanol was 2:3. The amount of nickel chloride hexahydrate dissolved in the mixed solvent was 5.8654 g, and the amount of iron chloride hexahydrate dissolved in the mixed solvent was 3.3351 g. The amount of the ACAC added in the preparation of the chelating agent solution was 1.164 mL, and the amount of substance of the ACAC in the chelating agent solution was 1/3.25 of the total amount of substance of Ni ions and Fe ions. Four Ni meshes were used, and the total mass of the four Ni meshes was 0.96 g. Each Ni mesh was a square with a side length of 20 mm in a plan view. The amount of the POX added to the chelating agent solution was 12.545 mL. A molar ratio of the content of Fe ions to the content of Ni in the Ni mesh during the shaking and stirring of the chelating agent solution including the Ni mesh was 0.75. In addition, a value obtained by dividing the content of Fe ions on a molar basis by the surface area of the Ni mesh was 0.2844 mmol/cm$^2$. An amount of the POX added was adjusted such that the ratio of the amount of substance of the POX to the amount of substance of the chloride ions in the mixed solution of the chelating agent solution and the POX would be 2.

(Comparative Example 1)

A mixed solvent was prepared by mixing 6.900 mL of water and 10.351 mL of ethanol. The ethanol was a product purchased from FUJIFILM Wako Pure Chemical Corporation. In the mixed solvent, a volume ratio of the water to the ethanol was 2:3. In this mixed solvent, 5.8654 g of nickel chloride hexahydrate and 3.3351 g of iron chloride hexahydrate were dissolved to prepare a solution. The nickel chloride hexahydrate and the iron chloride hexahydrate were products purchased from FUJIFILM Wako Pure Chemical Corporation. To this solution, 1.164 mL of acetylacetone (ACAC) as a chelating agent was added to obtain a chelating agent solution. The ACAC was a product purchased from Sigma-Aldrich Corporation. The amount of substance of the ACAC in the chelating agent solution was 1/3.25 of the total amount of substance of the Ni ions and the Fe ions. The pH of the chelating agent solution was 1.

One Ni mesh manufactured by Nilaco Corporation was washed with acetone for 10 minutes and then washed with a 1 M HCl aqueous solution for 10 minutes for degreasing the Ni mesh and removing impurities. The Ni mesh had a wire diameter of 0.1 mm, the number of meshes of the Ni mesh was 60, and the Ni mesh was a square with a side length of 20 mm in a plan view. The weight of the Ni mesh was 0.25 g. Next, the Ni mesh was washed with water and dried to complete the washing process for the Ni mesh.

After completion of the washing process, the Ni mesh was then immersed in the chelating agent solution. In this state, the chelating agent solution including the Ni mesh was shaken and stirred at 25°C for 24 hours. At this time, in accordance with the reaction in the above Formula (2), the Ni mesh was entirely etched and dissolved. As a result, no evaluable electrode was obtained in Comparative Example 1. The molar ratio of the content of Fe ions to the content of Ni in the Ni mesh was 2.9. Further, a value obtained by dividing the content of Fe ions on a molar basis by the surface area of the Ni mesh was 1.0919 $mmol/cm^2$.

(Comparative Example 2)

Five Ni meshes were used as the electrodes according to Comparative Example 2, after completion of washing in the same way as in Example 1.

(Comparative Example 3)

An electrode according to Comparative Example 3 was prepared in the same way as in Example 1, except for the following point. The chelating agent solution including the Ni mesh was not shaken or stirred before addition of the pH booster, but the pH booster was added to the chelating agent solution including the Ni mesh immediately after the Ni mesh was immersed in the chelating agent solution.

[Evaluation of electrode]

The oxygen evolution reaction (OER) overpotentials of the electrode according to the respective Examples and Comparative Examples 2 and 3 were evaluated. The following equipment was used for the measurements: a VersaSTAT4, potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD., as a working electrode jig. The electrodes as working electrodes according to the respective Examples and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)

[0120]

　Solution: 1M KOH solution
　Potential relative to reversible hydrogen electrode (RHE): 1.0 V to 1.7 V
　Number of cycles: 5 cycles
　Rate of potential sweep: 10 mV/s
　Temperature: 25°C

The OER overpotential was determined by subtracting a theoretical potential of 1.229 V required to drive the oxygen evolution reaction from the voltage corresponding to the current density of 10 $mA/cm^2$ in the fifth cycle. The results are shown in Table 1. Table 1 shows a molar ratio of the Fe ion content to the Ni content in the Ni mesh in production of an electrode, as well as a value obtained by dividing a content of the Fe ion on a molar basis by the surface area of the Ni mesh. Table 1 also shows whether or not the electrode was successfully produced.

From the measurement results for evaluation of the OER overpotential, the coverage of the layer including the LDH to the surface of the Ni mesh was determined based on the following Formula (3). The results are shown in Table 1. In addition, from the measurement results for evaluating the OER overpotential, the integral value of the current density $I_{Ni}$ at a potential in a range of 1.45 V to 1.2 V corresponding to the reduction reaction of $Ni^{3+} \rightarrow Ni^{2+}$ was calculated. The current density was calculated by dividing the current value by the apparent electrode area of the Ni mesh. In Formula (3), $S_{NiOx}$ is an integral value of the current density at a potential in a range of 1.38 V to 1.48 V, and $S_{Ni}$ is an integral value of the current density at a potential in a range of 1.35 V to 1.38 V. The peak in the current density at potentials in a range of 1.38 V to 1.48 V is a peak associated with the oxidation reaction $Ni^{2+} \rightarrow Ni^{3+}$, which is derived from the hydroxides of iron and nickel. The peak in the current density in a range of 1.35 V to 1.38 V is a peak associated with the oxidation reaction $Ni^{2+} \rightarrow Ni^{3+}$, which is derived from pure nickel.

$$Coverage = S_{NiOx}/(S_{Ni} + S_{NiOx}) \times 100 \qquad Formula\ (3)$$

As shown in Table 1, the OER overpotentials of the electrodes according to Examples 1 to 3 are lower than the OER overpotential of the electrode according to Comparative Example 2, whereby it is understood that the electrodes according to Examples 1 to 3 have high electrode activity. In the meantime, comparing each Example with Comparative Example 1, if the molar ratio of the content of the Fe ions to the content of Ni in the Ni mesh is high, a chemical reaction to dissolve the Ni becomes intense, and the entire Ni mesh dissolves, making it impossible to produce an electrode. For this reason, it is understood that the molar ratio of the content of Fe ions to the content of Ni in the Ni mesh is desirably 0.75 or less. In addition, it is understood that the value obtained by dividing the content of Fe ions on a molar basis by the surface area of the Ni mesh is desirably 0.29 mmol/cm$^2$ or less.

As shown in Table 1, the OER overpotentials of the electrodes according to Examples 1 and 2 are particularly low. Therefore, from the viewpoint of electrode activity, it was suggested that the molar ratio of the content of Fe ions to the content of Ni included in the Ni mesh be more desirably in a range of 0.05 to 0.25. In addition, it was suggested that the value obtained by dividing the content of Fe ions on a molar basis by the surface area of the Ni mesh be more desirably in a range of 0.01 mmol/cm$^2$ to 0.1 mmol/cm$^2$.

When comparing Example 1 with Comparative Example 3, the OER overpotential of the electrode according to Example 1 is lower than the OER overpotential of the electrode according to Comparative Example 3. Therefore, it is understood that the electrode according to Example 1 has higher electrode activity than the electrode according to Comparative Example 3. In addition, the coverage of the electrode according to Example 1 is higher than the coverage of the electrode according to Comparative Example 3. It is understood that the state of the layer including the LDH formed on the surface of the Ni mesh is likely to be improved by the process of shaking and stirring the chelating agent solution including the Ni mesh before addition of the pH booster.

[Evaluation of electrode durability]

The OER overpotentials of the electrodes according to of Example 1 and Comparative Examples 2 and 3 were measured for 1000 cycles to evaluate the durability of the electrodes. The following equipment was used for the measurements: a VersaSTAT4 potentiostat manufactured by Princeton Applied Research; an alkali sample vial (200 ml) manufactured by BAS Inc.; a Teflon (registered trademark) cap (200 ml) manufactured by BAS Inc.; and a plate electrode AE-2 manufactured by EC FRONTIER CO., LTD. as the working electrode jig. The electrodes as working electrodes according to Example 1 and Comparative Examples 2 and 3 were fixed to the jig. As the counter electrode, a double platinum wire counter electrode (D.6.0305.200J) manufactured by Metrohm AG was used. The current derived from the anode reaction of the water electrolysis cell was measured using the three-electrode method under the following measurement conditions. The anode reaction is the oxygen evolution reaction.

(Measurement conditions)

Solution: 1M KOH solution
Potential relative to RHE: 1.0 V to 1.7 V
Number of cycles: 1000 cycles
Potential sweep speed: 100 mV/sec
Temperature: 25°C

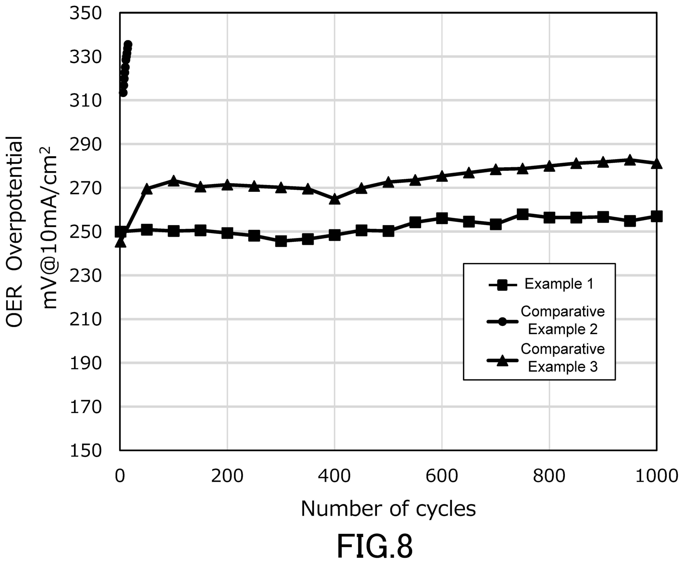

FIG. 8 is a graph showing a relation between OER overpotential and the number of cycles for the electrodes according to Example 1 and the electrodes according to Comparative Examples 2 and 3. In this graph, the OER overpotential for every 50 cycles is shown. Each cycle simulates the operation and suspension of water electrolysis.

Comparing Example 1 with Comparative Example 2 and Comparative Example 3, the OER overpotential of the electrode according to Example 1 does not rise by the 50th cycle. On the other hand, the OER overpotentials of the electrodes according to Comparative Examples 2 and 3 rise before the 50th cycle. This result suggests that the electrode according to Example 1 has higher durability than the electrodes according to Comparative Examples 2 and 3. Therefore, from the viewpoint of electrode durability, it is apparently important to promote mixing of the solution before forming the layer including the LDH by immersing the Ni mesh in a solution containing Fe ions and chloride ions.

[Identification of electrode structure and morphological observation]

Samples for morphological observation were picked up and processed using a focused ion beam (FIB) system (FB-2200 manufactured by Hitachi High-Technologies Corporation). Next, the samples for morphological observation were sliced using FIB NX5000 manufactured by Hitachi High-Tech Science. The structure of the electrode according to each Example and each Comparative Example was identified, and the morphology of the electrode was observed, by performing a cross-sectional observation using a transmission electron microscope (TEM) JEM-F200 manufactured by JEOL Ltd. In this way, the states of the LDH in the electrodes according to Examples and Comparative Examples were evaluated.

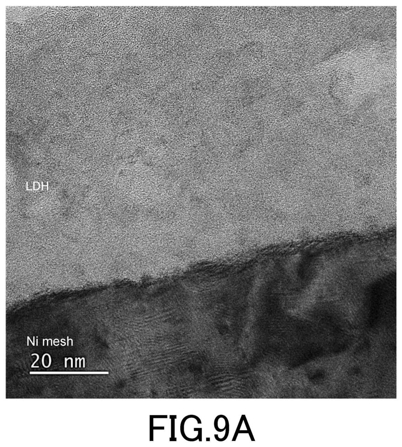

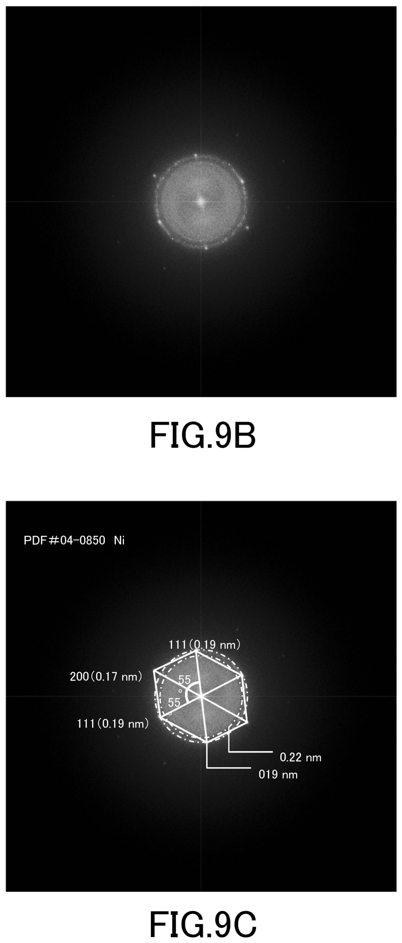

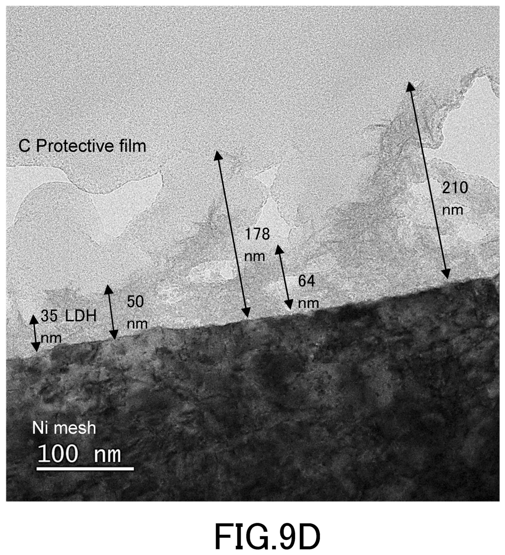

FIG. 9A is a TEM image of the electrode according to Example 1. FIG. 9B and FIG. 9C are electron diffraction images regarding the entire TEM image shown in FIG. 9A. In FIG. 9C, a shape obtained by connecting the diffraction spots identified in the electron diffraction image of FIG. 9B is shown. FIG. 9D is another TEM image of the electrode according to Example 1. As shown in FIG. 9A, FIG. 9B and FIG. 9C, it can be understood that an LDH is formed on the surface of the Ni mesh, and that nickel having a (111) plane orientation is present on the surface of the Ni mesh. Furthermore, in FIG. 9B, diffraction interference fringes derived from the LDH are also identified, and it is understood that the surface of the Ni mesh and the LDH are present in extremely close proximity to each other.

As shown in FIG. 9D, a layer including the LDH is formed uniformly on the surface of the Ni mesh, and the thickness of the layer is 35 nm or more.

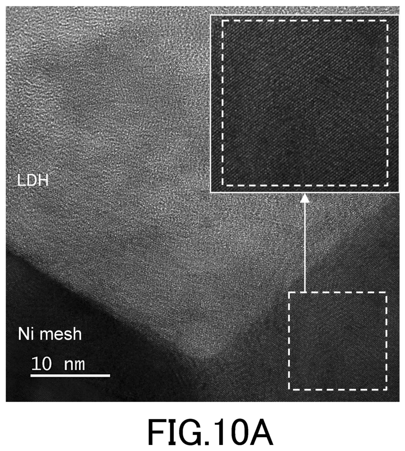

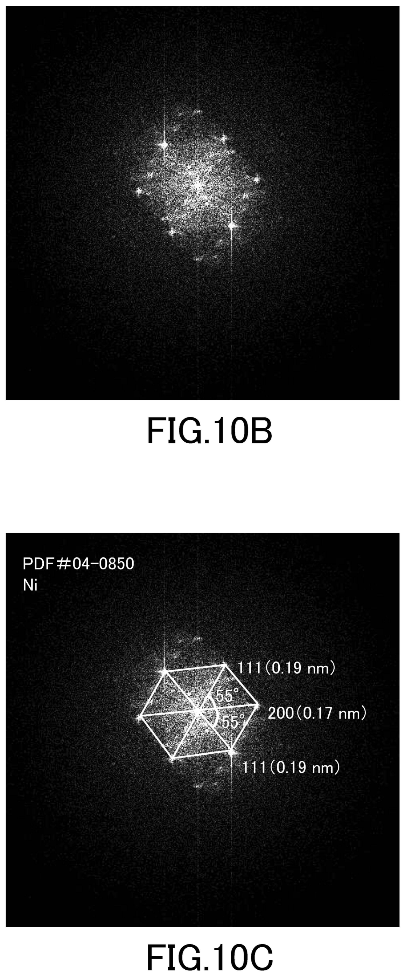

FIG. 10A is a TEM image of an electrode according to Example 3. FIG. 10B and FIG. 10C are electron diffraction images regarding the TEM image shown in FIG. 10A, and are electron diffraction images of the area surrounded by the white broken line in FIG. 10A. In FIG. 10C, a shape obtained by connecting the diffraction spots identified in the electron diffraction image of FIG. 10B is shown. As shown in FIG. 10A, FIG. 10B and FIG. 10C, it can be understood that in the electrode according to Example 3, nickel having a (111) plane orientation is present on the surface of the Ni mesh. In addition, the surface of the Ni mesh is significantly uneven. In Example 3, the molar ratio of the content of Fe ions to the content of Ni in the Ni mesh is larger in comparison with the counterpart according to Example 1. Therefore, it is understood that the Ni mesh was more etched during the shaking and stirring of the chelating agent solution including the Ni mesh before addition of the pH booster.

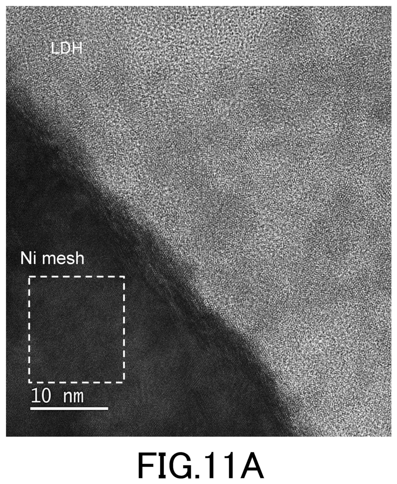

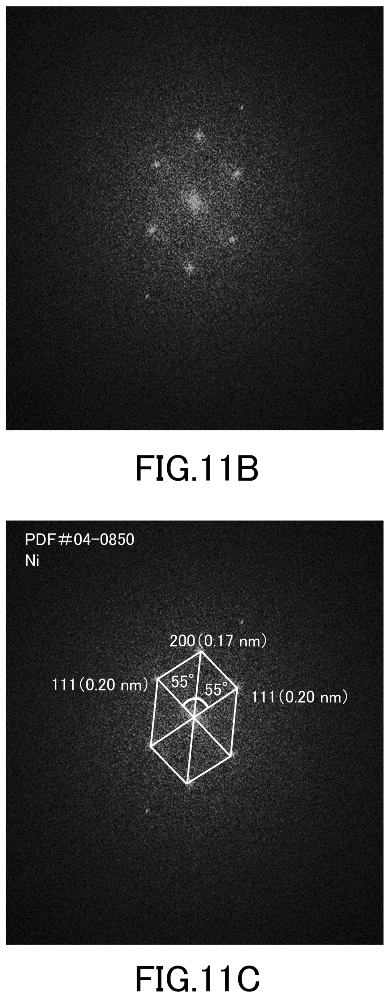

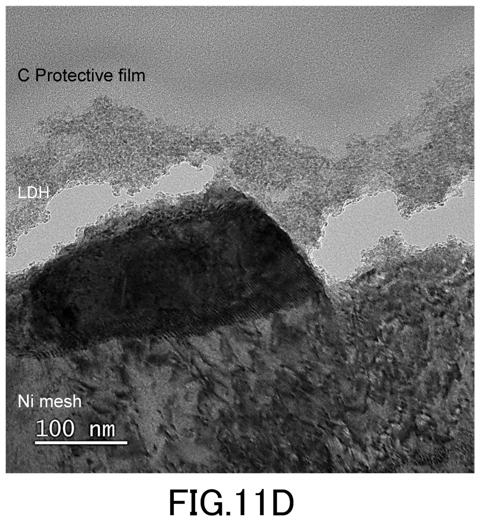

FIG. 11A is a TEM image of the electrode according to Comparative Example 3. FIG. 11B and FIG. 11C are electron diffraction images regarding the TEM image shown in FIG. 11A, and are electron diffraction images of the area surrounded by the white broken line in FIG. 11A. In FIG. 11C, the shape obtained by connecting the diffraction spots identified in the electron diffraction image of FIG. 11B is shown. FIG. 11D is another TEM image of the electrode according to Comparative Example 3.

FIG. 11A, FIG. 11B, and FIG. 11C show that nickel having a (111) plane orientation is present on the surface of the Ni mesh. On the other hand, FIG. 11D shows that a gap is present between the Ni mesh and the layer including the LDH. In other words, in Comparative Example 3, the layer including the LDH is not disposed on the surface of the Ni mesh. In Comparative Example 3, the chelating agent solution including the Ni mesh was not shaken or stirred before addition of the pH booster, and the pH booster was added to the chelating agent solution immediately after the Ni mesh was immersed in the chelating agent solution. Therefore, it is understood that the LDH was not firmly fixed to the surface of the Ni mesh and voids were created.

Many modifications and other embodiments of the present disclosure will be apparent to those skilled in the art with reference to the above description. Therefore, the above description should be interpreted only as an example, and is provided for the purpose of teaching those skilled in the art the best manner to carry out the present disclosure. The operating conditions, the composition, the structure and/or the function can be substantially modified without departing from the spirit of the present disclosure.

[Table 1]

| | Molar ratio of Fe ion content to Ni content in Ni mesh | Fe ion content / Ni mesh surface area [mmol/cm$^2$] | Electrode production | Coverage [%] | Integral value $I_{Ni}$ m A/cm$^2$] | OER Overpotential [mV] |
|---|---|---|---|---|---|---|
| Example1 | 0.25 | 0.0942 | Possible | 99.7 | 803 | 253 |
| Example 2 | 0.05 | 0.0188 | Possible | 99.4 | 2531 | 244 |
| Example 3 | 0.75 | 0.2844 | Possible | 58.5 | 398 | 318 |
| Comparative Example 1 | 2.9 | 1.0919 | Impossible | - | - | - |
| Comparative Example 2 | - | - | Possible | - | 67 | 352 |
| Comparative Example3 | 0.25 | 0.0942 | Possible | 98.4 | 200 | 272 |

INDUSTRIAL APPLICABILITY

The water electrolysis electrode disclosed herein can be used as an anode or a cathode for water electrolysis.

**Claims**

1.   A water electrolysis electrode comprising:

     a conductive substrate; and
     a layered double hydroxide layer comprising two or more transition metals, wherein
     the conductive substrate has a surface formed of nickel having a (111) plane orientation, and
     the layered double hydroxide layer is disposed on the surface.

2.   The water electrolysis electrode according to claim 1, wherein
     when a potential of the water electrolysis electrode is changed to cause a reduction reaction of the nickel, an integral value of a current density corresponding to the reduction reaction is greater than 200 mA/cm$^2$.

3.   The water electrolysis electrode according to claim 1 or 2, wherein
     the nickel forming the surface has a purity of 90 mass% or more.

4.   The water electrolysis electrode according to any one of claims 1 to 3, wherein
     the layered double hydroxide layer comprises a chelating agent.

5.   The water electrolysis electrode according to claim 4, wherein
     the chelating agent comprises at least one selected from the group consisting of acetylacetone and a citrate.

6.   The water electrolysis electrode according to any one of claims 1 to 5, wherein
     the layered double hydroxide layer has a thickness of 35 nm or more.

7.   The water electrolysis electrode according to any pone of claims 1 to 6, wherein
     the two or more transition metals comprises at least two selected from the group consisting of V, Cr, Mn, Fe, Co, Ni, Cu, W, and Ru.

8.   The water electrolysis electrode according to claim 7, wherein
     the two or more transition metals comprises at least one selected from the group consisting of Ni and Fe.

9.   A water electrolysis anode comprising the water electrolysis electrode according to any one of claims 1 to 8.

10.  A water electrolysis cathode comprising the water electrolysis electrode according to any one of claims 1 to 8.

**11.** A water electrolysis cell comprising:

an anode;
a cathode; and
a separator, wherein
the water electrolysis cell satisfies at least one selected from the group consisting of the anode being the water electrolysis anode according to claim 9 and the cathode being the water electrolysis cathode according to claim 10.

**12.** A water electrolysis cell comprising:

an anode;
a cathode; and
an anion-exchange membrane, wherein
the water electrolysis cell satisfies at least one selected from the group consisting of the anode being the water electrolysis anode according to claim 9 and the cathode being the water electrolysis cathode according to claim 10.

**13.** A water electrolysis device comprising:

the water electrolysis cell according to claim 11 or 12; and
a voltage applicator configured to apply a voltage between the cathode and the anode.

**14.** A method for manufacturing a water electrolysis electrode, comprising:

promoting mixing of a solution containing an ion of a transition metal and a chloride ion while a conductive substrate having a surface formed of nickel is immersed in the solution; and
forming a layered double hydroxide layer comprising two or more transition metals on the surface of the conductive substrate.

**15.** The method according to claim 14, wherein
one of the two or more transition metals in the layered double hydroxide layer is the same metal species as the transition metal of the ion included in the solution.

**16.** The method according to claim 14 or 15, wherein
the layered double hydroxide layer is formed by adjusting the solution to be alkaline.

**17.** The method according to any one of claims 14 to 16, wherein
the two or more transition metals comprise at least two selected from the group consisting of V, Cr, Mn, Fe, Co, Ni, Cu, W, and Ru.

**18.** The method according to any one of claims 14 to 17, wherein
the ion of the transition metal contained in the solution is an Fe ion.

**19.** The method according to claim 18, wherein
a molar ratio of a content of the Fe ion to a content of the nickel in the conductive substrate is 0.75 or less.

**20.** The method according to claim 19, wherein
the molar ratio is in a range of 0.05 to 0.25.

**21.** The method according to claim 18, wherein
a value obtained by dividing a content of the Fe ion on a molar basis by a surface area of the conductive substrate is 0.29 $mmol/cm^2$ or less.

**22.** The method according to claim 21, wherein
the value is in a range of 0.01 $mmol/cm^2$ to 0.1 $mmol/cm^2$.

**23.** The method according to any one of claims 14 to 22, wherein

the solution further comprises a chelating agent.

24. The method according to claim 23, wherein
the chelating agent comprises at least one selected from the group consisting of acetylacetone and a citrate.

FIG.1

⊘ : $M_1^{2+}$    ● : $M_2^{3+}$    ○ : $OH^-$

▦ : $A^{n-}$    ◉ : $H_2O$

FIG.2

FIG.3

2

2b

2a

2s    2n    2p    2m

# FIG.4

3

40

2b

2a

2

2s    2n    2p    2m

# FIG.5

FIG.6

FIG.7

FIG.8

FIG.9A

FIG.9B

FIG.9C

FIG.9D

FIG.10A

FIG.10B

FIG.10C

LDH

Ni mesh

10 nm

FIG.11A

FIG.11B

FIG.11C

FIG.11D

## INTERNATIONAL SEARCH REPORT

| International application No. |
|---|
| **PCT/JP2023/023432** |

| A. | CLASSIFICATION OF SUBJECT MATTER |
|---|---|

$C25B$ $9/00$(2021.01)i; $C25B$ $1/04$(2021.01)i; $C25B$ $11/052$(2021.01)i
FI: C25B9/00 A; C25B1/04; C25B11/052

According to International Patent Classification (IPC) or to both national classification and IPC

| B. | FIELDS SEARCHED |
|---|---|

Minimum documentation searched (classification system followed by classification symbols)

C25B9/00; C25B1/04; C25B11/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110124673 A (UNIV FUDAN) 16 August 2019 (2019-08-16) <br> example 1 | 1-3, 6-8, 10 |
| Y | | 1, 3-13 |
| A | | 14-24 |
| X | WO 2022/014377 A1 (PANASONIC INTELLECTUAL PROPERTY MANAGEMENT CO., LTD.) 20 January 2022 (2022-01-20) <br> example 1, claims, paragraph [0094] | 14-20, 23-24 |
| Y | | 1, 3-15, 17-19, 21 |
| A | | 2, 22 |
| X | WO 2022/071127 A1 (PANASONIC INTELLECTUAL PROPERTY MANAGEMENT CO., LTD.) 07 April 2022 (2022-04-07) <br> claims, example 1 | 14-18, 23-24 |
| Y | | 1, 3-15, 17-19, 21 |
| A | | 2, 20, 22 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 August 2023** | **29 August 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
|---|
| **PCT/JP2023/023432** |

**C.    DOCUMENTS CONSIDERED TO BE RELEVANT**

| Category* | Citation of document, with indication, where appropriate, of the relevant passages | Relevant to claim No. |
|---|---|---|
| Y | CN 113926456 A (UNIV HANGZHOU NORMAL) 14 January 2022 (2022-01-14) examples, paragraph [0014] | 1, 3, 6-15, 17-19, 21 |
| A | | 2, 4-5, 16, 20, 22-24 |
| X | JP 2021-139027 A (DE NORA PERMELEC LTD.) 16 September 2021 (2021-09-16) study example 1, paragraphs [0037], [0044], [0050], claims, fig. 4, 5 | 1-4, 7-9, 11-13 |
| Y | | 6-13 |
| A | | 5, 14-24 |

Form PCT/ISA/210 (second sheet) (January 2015)

## INTERNATIONAL SEARCH REPORT
### Information on patent family members

International application No.

**PCT/JP2023/023432**

| Patent document cited in search report | | | Publication date (day/month/year) | Patent family member(s) | Publication date (day/month/year) |
|---|---|---|---|---|---|
| CN | 110124673 | A | 16 August 2019 | (Family: none) | |
| WO | 2022/014377 | A1 | 20 January 2022 | US 2023/0121007 A1 example 1, claims, paragraph [0118]<br>CN 115812007 A | |
| WO | 2022/071127 | A1 | 07 April 2022 | (Family: none) | |
| CN | 113926456 | A | 14 January 2022 | (Family: none) | |
| JP | 2021-139027 | A | 16 September 2021 | US 2023/0109702 A1 study example 1, paragraphs [0058], [0068], [0076], claims, fig. 4-5<br>EP 4119700 A1<br>CN 115244220 A<br>KR 10-2022-0136465 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011190534 A

- WO 2017154134 A

**Non-patent literature cited in the description**

- *Electrochimica Acta, (UK)*, 2019, vol. 315, 94-101

- *ACS Catalysis, (US)*, 2018, vol. 8, 11342-11351